# FASCICULE DE BREVET EUROPEEN

(11) **EP 2 166 731 B1**
(45) Date de publication et mention de la délivrance du brevet: **24.08.2011**
(21) Numéro de dépôt: 09170965.9
(22) Date de dépôt: 22.09.2009
(51) Int. Cl.: H04L 29/08

(54) **Système et procédé d'établissement de communications.**
System und Verfahren zur Verbindungsherstellung
System and method for establishing communications

(30) Priorité: 22.09.2008 FR 0856358
(43) Date de publication de la demande: 24.03.2010
(73) Titulaire: FRANCE TELECOM, 75015 Paris (FR)
(72) Inventeur: Le Huerou, Emmanuel, 22700, Saint Quay Perros (FR); Portugal, Jean-Michel, 22300, Lannion (FR)
(74) Mandataire: Le Saux, Gaël

(56) Documents cités:
- WO-A-01/97543
- WO-A-2006/047720
- US-A1- 2006 058 045
- US-A1- 2007 237 096
- US-A1- 2008 031 203

## Description

### 1 DOMAINE DE L'INVENTION

La présente invention se rapporte au domaine des communications interpersonnelles dans un réseau de communication. La présente invention se rapporte plus particulièrement à l'établissement de communication interpersonnelle entre des utilisateurs.

De nos jours, des communications fortuites existent naturellement ente des personnes. Elles font partie de la vie quotidienne. Il est fréquent de croiser quelqu'un dans la rue et de débuter une conversation. Une conversation interpersonnelle débute alors.

Dans le monde des télécommunications, les communications interpersonnelles sont provoquées par les utilisateurs des réseaux de communications ou des services fournis sur la base de ces réseaux de communication. Le paradigme fondateur du monde des télécommunications est celui de l'identité. Une communication interpersonnelle dans le monde des télécommunications est en effet liée à l'identité des utilisateurs. Ainsi les utilisateurs appellent d'autres utilisateurs préidentifiés, envoient des messages (message vocal, textuel, vidéo) à d'autres utilisateurs préidentifiés.

Depuis peu, il est devenu possible dans des univers numériques et notamment dans des mondes virtuels tel que « second life » (marque déposée), de retrouver une situation de rencontre fortuite au cours de « ballades numériques ». Dans ces univers numériques, l'identité des utilisateurs étant virtuelle, les possibilités d'entrer en communication sont limitées par l'univers de communication dans lequel les utilisateurs se rencontrent. Le phénomène de rencontre virtuelle fortuite peut cependant être accentué si l'on considère non plus des mondes virtuels préconstruits (tel que « second life » (marque déposée)), mais des mondes virtuels dynamiques tels que des sites web, au sein desquels par exemple, les visiteurs peuvent se rencontrer et dialoguer.

### 2 ART ANTERIEUR

Des solutions de mise en relation entre des utilisateurs de mondes virtuels ou de sites web existent. Elles mettent en oeuvre des mécanismes de communication instantanée ou des mécanismes d'appel, par le biais de terminaux de communication lorsque des utilisateurs souhaitent entrer en communication.

Il s'avère cependant que, en l'état actuel de la technique, les communications « fortuites » sont relativement limitées. Il est possible, bien entendu, de démarrer ce type de communication dans des séances de « chat » en messagerie instantanée ou par le biais de services téléphoniques dédiés, mais ces mises en relation restent basées sur l'identité des personnes (généralement des pseudonymes) et sur l'abonnement à des salons thématiques.

Un inconvénient de cette technique de l'art antérieur est qu'il n'est pas possible d'entamer une communication d'une part sans être préalablement en cours d'utilisation du terminal qui est mis en oeuvre pour débuter la communication (par exemple un ordinateur personnel) et d'autres part sans qu'il soit nécessaire de s'être connecté, au préalable, au système permettant les mises en relation (le logiciel de messagerie instantanée, le « chat » sur internet) et de s'y être identifié.

Ainsi, par exemple, il n'est pas possible, pour un utilisateur, de débuter une conversation ou de recevoir un message de la part d'une personne que l'on ne connaît pas alors que cet utilisateur n'est pas connecté au logiciel de messagerie instantanée auquel cette personne est elle-même connectée.

Le document « *GRAVITATE* », (WO 01/97543) du 20 décembre 2001, se rapporte à une méthode et à un système permettant d'initier une communication de manière automatique entre des unités de télécommunication lorsque ces unités de télécommunication se trouvent à une distance géographique (basée sur une localisation géographique d'une des unités de communications).

En d'autres termes, *GRAVITATE* propose une méthode qui comprend une étape de création d'une connexion entre un terminal mobile (MU) et une unité de télécommunications (TU) associé à une localisation géographique prédéterminée lorsque le MU est dans une distance prédéterminée de la localisation géographique prédéterminée.

Selon *GRAVITATE,* la localisation géographique prédéterminée est déterminée en se basant en partie sur un attribut associé à l'utilisateur du terminal mobile MU.

*GRAVITATE* vise à permettre une mise en relation entre individus en utilisant les *« acquaintance graphs »* (graphes de mise en relation entre individus) et notamment les caractéristiques communes des individus entre eux.

### 3 RESUME DE L'INVENTION

L'invention ne présente pas ces inconvénients. L'invention concerne en effet un système d'établissement d'une communication entre au moins deux terminaux détenus respectivement par au moins un premier et un deuxième utilisateur.

Selon l'invention, un tel système comprend :
- des moyens de collecte d'au moins un paramètre représentatif d'une caractéristique propre à au moins un utilisateur ;
- des moyens de calcul d'au moins une distance entre un premier ensemble d'au moins un des paramètres dudit premier utilisateur et un second ensemble d'au moins un paramètre correspondant dudit deuxième utilisateur ;
- des moyens d'établissement d'une communication entre lesdits au moins deux terminaux, lorsque ladite distance atteint un seuil prédéterminé.

Ainsi, l'invention permet de s'affranchir de la notion d'identité pour la mise en relation de deux utilisateurs. Les techniques de l'art antérieur obligent deux utilisateurs à être identifié pour pouvoir être mis en relation : un premier utilisateur contacte un deuxième utilisateur pour aborder tel ou tel sujet. L'invention permet à des utilisateurs d'entrer en contact sans que l'un d'entre eux n'ait eu besoin d'identifier l'autre. Les utilisateurs sont mis en relation automatiquement, et sans intervention de leur part, sur la base de leurs paramètres et de la distance qui les sépare d'autres utilisateurs en considérant ces paramètres.

En d'autres termes, il n'y a pas, selon l'invention, un terminal appelant et un terminal appelé, mais deux terminaux appelés, mis en communication suite à une décision prise par un tiers, le système d'établissement des communications, qui prend cette décision après une analyse de différents critères définis au préalable par les utilisateurs.

Selon un mode de réalisation particulier de l'invention, lesdits moyens de calcul de ladite distance comprennent :
- des moyens d'apprentissage de règles de mise en relation d'utilisateurs en fonction de mises en relation précédemment réalisées ;
- des moyens de concaténation de données de présences thématiques d'utilisateurs audit au moins un paramètre propre desdits utilisateurs.

Ces moyens peuvent se présenter sous la forme de modules logiciels applicatifs qui sont chargés au sein d'une mémoire d'un ordinateur. Ces moyens peuvent également se présenter sous la forme de puces électronique préprogrammées pour réaliser l'apprentissage et/ou la concaténation de données.

Selon une caractéristique particulière de l'invention, lesdits moyens de calcul de ladite distance comprennent :
- des moyens d'enregistrement desdites règles de mise en relation d'utilisateurs en fonction de règles préalablement apprises ;
- des moyens d'enregistrement desdites données de présences thématiques d'utilisateurs préalablement concaténées ;
- des moyens d'enregistrement desdites distances entre lesdits utilisateurs.

Selon un mode de réalisation original de l'invention, lesdits moyens d'enregistrement desdites distances entre lesdits utilisateurs comprennent au moins une matrice de calcul de distance permettant l'affectation d'au moins une distance entre au moins deux utilisateurs pour un moins un paramètre donné.

Ainsi, les traitements de distance ultérieurs s'en trouvent facilités.

Selon une caractéristique particulière de l'invention, lesdits moyens de collecte desdits paramètres représentatifs desdites caractéristiques propres desdits utilisateurs comprennent en outre des moyens d'obtention d'au moins une information de présence desdits utilisateurs.

Ainsi, il est possible de savoir si l'utilisateur est présent, ou absent, ou indisponible au sein du réseau de communication et de moduler le calcul de distance en fonction (par exemple, l'utilisateur est connecté à un site communautaire de vente d'objets d'occasion).

Selon un mode de réalisation particulier de l'invention, lesdits moyens de collecte desdits paramètres représentatifs desdites caractéristiques propres desdits utilisateurs comprennent en outre des moyens d'obtention d'une information de désignation d'un terminal permettant la mise en relation desdits utilisateurs.

Ainsi, l'invention permet d'utiliser un dispositif de mise en relation qui est adapté à l'utilisateur. Il peut par exemple s'agir d'une ligne de téléphone fixe, d'un terminal mobile, d'une adresse de messagerie électronique ou d'un compte de messagerie instantanée. Ainsi, l'invention permet d'initier une mise en relation entre un utilisateur utilisant son ordinateur personnel et un autre utilisateur utilisant un téléphone fixe sans aucune intervention de la part de ces deux utilisateurs.

Selon une caractéristique particulière de l'invention, lesdits moyens de collecte desdits paramètres représentatifs desdites caractéristiques propres desdits utilisateurs comprennent en outre des moyens de gestion de la présence et/ou de l'état communautaire desdits utilisateurs.

L'invention concerne également un procédé d'établissement d'une communication entre au moins deux terminaux détenus respectivement par au moins un premier et un second utilisateur.

Selon l'invention, un tel procédé comprend :
- une étape de collecte d'au moins un paramètre représentatif d'une caractéristique propre à au moins un utilisateur ;
- une étape de calcul d'au moins une distance entre un premier ensemble d'au moins un des paramètres dudit premier utilisateur et un second ensemble d'au moins un paramètre correspondant dudit deuxième utilisateur ;
- une étape d'établissement d'une communication entre lesdits au moins deux terminaux, lorsque ladite distance atteint un seuil prédéterminé.

Ainsi, l'invention permet de mettre en relation, de manière spontanée, des utilisateurs en fonction d'une distance qui est calculée entre des caractéristiques d'utilisateur des terminaux de communication par le biais desquels la mise en relation est effectuée.

Selon une caractéristique particulière de l'invention, au moins certains desdits paramètres sont définis par rapport à un contexte virtuel fréquenté par au moins un desdits utilisateurs.

Un contexte virtuel se rapporte à un ensemble de données liées à une évolution d'un utilisateur au sien d'un univers qui peut être soit un site internet, soit un univers médian ou toute autre implémentation technique d'un espace dans lequel un utilisateur peut évoluer. Un contexte virtuel peut contenir des informations de profil d'utilisateur ainsi que des informations dynamiques liées à des actions entreprises par l'utilisateur dans l'univers (un déplacement, une rencontre, une sélection de produit sur un site marchand, etc).

Selon un mode de réalisation original de l'invention, lesdits paramètres appartiennent au groupe comprenant au moins :
- un paramètre de géolocalisation réelle ;
- un contexte virtuel fréquenté ;
- une présence thématique ;
- un paramètre d'utilisateur pris en charge dans un contexte virtuel.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé tel que décrit précédemment.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente de façon schématique un système d'établissement de communications selon l'invention ;
- la figure 2 illustre de façon plus détaillé le sous-système de calcul des distances et d'établissement des appels de la figure 1.

### 5 DESCRIPTION DETAILLEE DE L'INVENTION

### 5.1 Rappel du principe de l'invention

L'invention propose de provoquer, ou d'établir, des communications fortuites entre des utilisateurs du réseau de communication en fonction d'une distance qui les sépare. Dans le monde réel, la distance entre deux protagonistes permet de déterminer la possibilité de communiquer de vive voix et d'engager une conversation de manière spontanée. L'invention permet la tenue de telles conversations spontanées à partir d'univers numériques et de contextes virtuels en calculant une distance entre les utilisateurs pour déterminer si la communication peut être établie et a des chances d'être fructueuse. Pour assurer la communication proprement dite, l'invention met en oeuvre les moyens de communication classiques (téléphonie fixe ou mobile, visiophonie, messagerie électronique, messagerie instantanée).

Selon l'invention, c'est donc le système d'établissement des communications, géré par un opérateur de téléphonie par exemple, qui décide de l'opportunité d'une communication, et qui établit la communication en mettant en relation deux terminaux (et donc deux utilisateurs) sans action positive de l'un ou l'autre de ces terminaux. Ce n'est donc pas l'utilisateur qui effectue une démarche d'appel, ou de connexion, d'un appelant vers un appelé, mais le système qui décide de mettre en communication deux terminaux (ou deux « appelés »).

La description qui suit se base sur les notions suivantes :
- la « présence thématique », qui est la disponibilité souhaitée par un utilisateur ou encore pour une communauté d'utilisateurs déterminée pour un type d'activité précis. Ce type d'activité peut être : « Disponible pour un tennis ce soir », « à la recherche d'un véhicule d'occasion de type ... », etc. C'est un paramètre propre à l'utilisateur ou à un groupe d'utilisateurs ;
- le « mode de présence » est un complément de choix de l'utilisateur : eCommerce, Géographique, Communautaire, Entreprise, Sphère privée ... Ce mode peut être complété par d'autres paramètres propres ;
- des « paramètres utilisateurs », qui sont propres à chaque utilisateur, et qui peuvent être constitués d'un ensemble de données fixes, sélectionnées par l'utilisateur telles que : le ou les modes de présence, le terminal principal, le moyen de communication préféré (voix, sms, ...), etc. Ces paramètres utilisateurs sont enregistrés dans une instance de modèle d'utilisateur avec d'autres données concernant les utilisateurs
- le « modèle utilisateur », qui représente l'ensemble de données vues par le système et permettant de caractériser l'état d'un utilisateur. Ce modèle regroupe donc des attributs et des noeuds qui permettent de définir la présence thématique, les paramètres mais aussi toutes les données issues de sources connues du système (géolocalisation, informations de session, information des communautés, présence sur une messagerie instantanée, etc.) Le modèle utilisateur est utilisé pour créer des instances d'utilisateurs. Une instance correspond à une intégration des données d'un utilisateur dans un modèle. Un modèle d'utilisateur peut par exemple être implémenté sous la forme d'une DTD (« Document Type Définition» pour « Définition de Document Type ») pour un fichier XML (« Extensible Markup Language » pour « langage à balise extensible») ou d'une structure particulière d'une base de données. L'instance d'une DTD sera un fichier XML. L'instance d'une structure de base de données comprendra des enregistrements dans les tables de cette base de données.
- des « règles de comptage », qui sont des fonctions de calculs qui permettent d'estimer une distance entre les utilisateurs tenant compte des modes de présences et des paramètres utilisateurs qui sont contenus dans les instances de modèles ;
- la « distance inter-utilisateurs » qui est la représentation numérique d'une « proximité thématique » des utilisateurs. C'est elle qui permet au système de déclencher une mise en relation dès que la distance est jugée suffisamment proche entre deux utilisateurs qui possèdent des paramètres pertinents.

L'invention peut être implémentée sous la forme d'un système comportant plusieurs sous-systèmes chargés de mettre en oeuvre les différentes fonctionnalités de l'ensemble.

L'invention permet ainsi d'offrir une solution de mise en relation de personnes de façon spontanée et basée sur les moyens de télécommunication classiques (téléphone, messageries, ...). On met ainsi en place un système capable de provoquer et/ou de proposer des mises en relation de façon automatique en activant différents paramètres propres sélectionnés préalablement par l'utilisateur.

Des tels paramètres peuvent être par exemple :
- la géolocalisation des utilisateurs dans le monde réel;
- le contexte virtuel fréquenté (page web, univers médian, ...) par l'utilisateur ;
- la « présence thématique » des utilisateurs qui peuvent s'être déclarés disponibles pour un type d'activité ou pour une certaine communauté ;
- d'autres paramètres propres définis par l'utilisateur et pris en charge par le contexte virtuel.

La mise en relation entre les utilisateurs est réalisée de façon non intrusive tout en permettant de garantir la confidentialité, à l'identique de la vie réelle qui gère la convivialité par des règles de bonnes conduites généralement admises, le plus souvent des attitudes ou des comportements culturels (« étiquette »).

Dans au moins un mode de réalisation de l'invention, la mise en relation peut être étendue à une conférence entre plusieurs utilisateurs dont les distances sont suffisamment proches.

Dans au moins un autre mode de réalisation de l'invention, le système de calcul de distance peut s'appuyer sur des mécanismes de "logique floue", qui permettent de définir une distance entre utilisateurs à l'aide de mécanisme d'intelligence artificielle.

Dans au moins un autre mode de réalisation, des outils d'analyse sémantique permettront de traiter des messages de présence thématique « naturels » afin de compléter les modèles utilisateurs : « je suis disponible pour un tennis entre 18h30 et 20h ce soir et je suis classé 15/3 ». L'invention sera ainsi à même de traiter des paramètres plus complexes que les paramètres prédéterminés issus de systèmes d'informations.

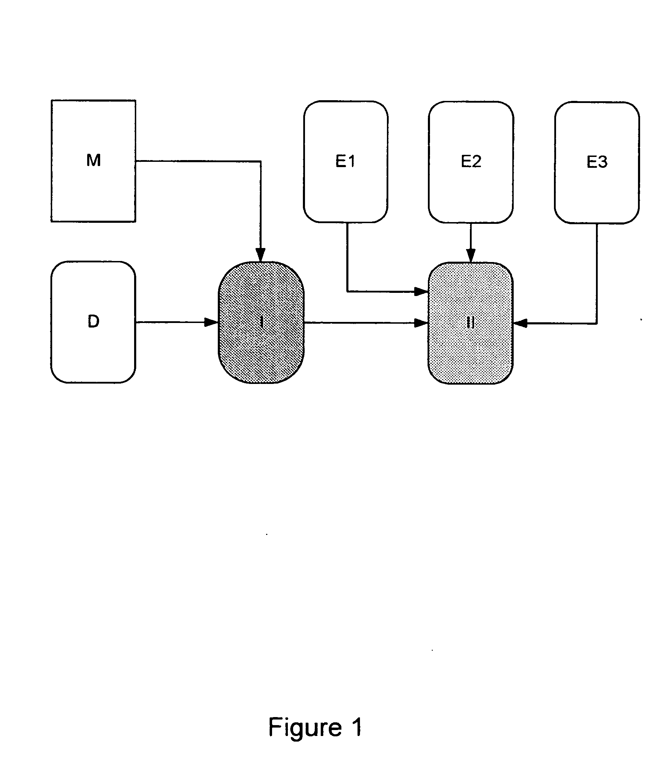

On présente, en relation avec la figure 1, la technique de création d'une instance d'utilisateur à partir d'un modèle d'utilisateur.

Un modèle M est utilisé comme canevas permettant la saisie de données D en provenance de l'utilisateur. Ces saisies sont stockées en mémoire sous la forme d'une instance 1 dans un fichier, soit dans un espace mémoire d'un serveur informatique soit dans une mémoire de masse de type disque dur. Cette instance 1 peut ensuite être complétée (11) par des données concernant l'utilisateur, qui proviennent d'autres systèmes (E1, E2, E3), également appelés « enablers ». Ces données peuvent par exemple indiquer des états de présence thématique de l'utilisateur ou des états de connexion de celui-ci à différentes applications informatiques, telles que des services en ligne ou des applications de messagerie instantanée. L'instance complétée II est mise à jour en permanence en fonction de l'évolution des données liées à l'utilisateur en provenance des autres systèmes (E1, E2, E3).

Par la suite, on présente notamment le cas d'un système selon l'invention permettant la mise en relation d'utilisateurs en fonctions de paramètres propres. Il est clair cependant que l'invention ne se limite pas à ce système particulier, mais peut également être mise en oeuvre dans de nombreuses autres configurations.

### 5.2 Description d'un système de gestion des communications spontanées selon l'invention

Dans au moins un mode de réalisation, l'invention peut se présenter sous la forme d'un système de gestion des communications spontanées intégré au sein d'un réseau de communication. Les trois éléments principaux de ce système sont : un sous-système de collecte, un sous-système de calcul de distances entre les utilisateurs, un sous-système de gestion et de présentation des appels.

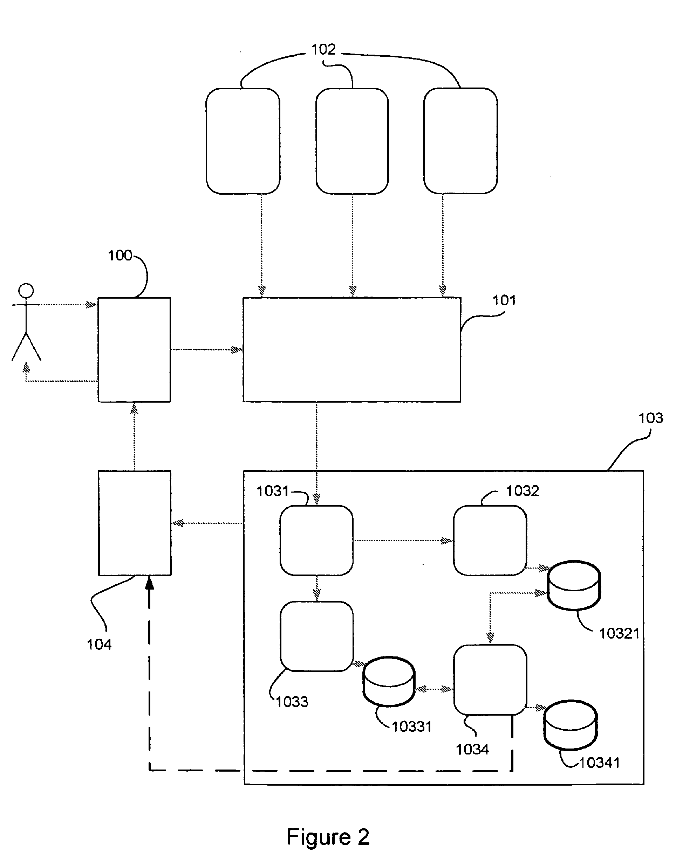

On présente, en relation avec la figure 2, l'architecture générale du système selon l'invention.

Ce système comprend :
- des moyens de saisies de données (100) : ces moyens de saisies peuvent être par exemple soit une interface d'une application spécifique (« RichMedia ») disponible sur un site internet, ou encore une application informatique installée sur un terminal de l'utilisateur.
- un sous système de collecte (101) qui permet d'obtenir et de rassembler des données concernant les utilisateurs. Ces données sont insérées dans des instances de modèles d'utilisateurs : une instance de modèle est utilisée pour un utilisateur données. Dans d'autres modes de réalisation de l'invention, plusieurs modèle d'utilisateurs peuvent exister et il est possible d'avoir une instance de chaque modèle pour chaque utilisateur ;
- outre les moyens de saisie (100), le sous système de collecte (101) récupère également des données en provenance de services tiers (102) (également appelés « enablers » en anglais) qui permettent d'obtenir des données d'utilisateurs : par exemple, un site de vente en ligne de produits d'occasion peut posséder un service qui indique si l'utilisateur est actuellement connecté ou non au site en question ;
- le sous système de collecte (101) fournit les informations de présence thématiques, les paramètres, les contextes (réunis dans une instance de modèle) à un sous-système de calcul des distances et de génération des appels (103). Ce sous système (103) permet d'obtenir une distance entre des utilisateurs et de déterminer si ces utilisateurs peuvent et doivent être mis en relation de façon spontanée ;
- un système de gestion des appels et de présentation de ces appels (104) reçoit des requêtes de déclenchement d'appel entre les utilisateurs de la part du sous-système de calcul des distances et de génération des appels (103). Le système de gestion des appels et de présentation de ces appels (104) peut générer plusieurs types de mise en relation : voix, messages de type SMS, courriers électroniques, etc.

Le sous-système de calcul des distances et de génération des appels (103) comprend quant à lui :
- une interface (1031) de type API (de l'anglais pour « Application Programming Interface ») qui permet de réaliser l'association de ce sous système avec les autres sous systèmes du système de l'invention ;
- un module de concaténation des présences thématiques (1032) ;
- un espace de stockage des instances des modèles d'utilisateurs (10321) ;
- un module d'apprentissage des règles de comptage et de mise en relations spontanées en fonction des distances entre les utilisateurs (1033) ;
- un espace de stockage des règles de comptage et de mise en relations spontanées en fonction des distances entre les utilisateurs (10331) ;
- un module de calcul de distance entre les utilisateurs (1034) qui se base sur les règles de comptage précédemment apprises ou saisies par des opérateurs du système ;
- un espace de stockage des distances entre les utilisateurs (10341). Cet espace est utilisé pour enregistrer en continu les distances entre les utilisateurs. Il est utilisé pour mettre à jour régulièrement les distances. Ces distances sont stockées par exemple sous la forme de matrices. D'autres structures de stockages peuvent être utilisées, mais les matrices présentent des avantages spécifiques qui sont détaillés par la suite. Les structures qui présentent les mêmes avantages que les matrices peuvent donc être utilisées.

### 5.2.1 Sous système de collecte

Le sous système de collecte obtient des modèles d'utilisateurs et des règles de comptage basés sur les informations issues de :
- la présence thématique des utilisateurs : "non disponible en ce moment", "recherche partenaire pour un tennis ce matin", "disponible pour mes proches uniquement", "souhaite acheter une voiture", etc.
- des paramètres utilisateurs comprenant le mode de présence : "appels sur terminal mobile uniquement", "pas d'appels sur une plage horaire définie", "pas d'appel commerciaux", "appels uniquement sur le même lieu géographique", etc.
- des informations de géolocalisation ou toute autres informations issues du système ;
- des informations issues de son contexte et des habitudes de l'utilisateur et apprise par le système.

Les informations sont majoritairement saisies par les utilisateurs, par l'intermédiaire d'une ou de plusieurs interfaces permettant de saisir ou de modifier des paramètres prédéfinis, tels que des paramètres de présence thématique.

Ce sous-système de collecte peut également être connecté à différents services et serveurs d'information qui renseignent sur l'état d'un utilisateur et fournissent par exemple une présence communautaire, un service de géolocalisation, des renseignements sur l'ouverture d'une session utilisateur (par exemple l'utilisateur a ouvert une session sur un site d'enchère en ligne dans la rubrique automobile), une présence auprès du réseau de l'opérateur. Ces services et serveur sont appelés des « enablers » et permettent d'obtenir automatiquement des informations sur le contexte des utilisateurs.

### 5.2.2 Sous-système de calcul de distance entre utilisateurs

Le sous-système de calcul de distance entre utilisateurs se base sur les données des instances des modèles des utilisateurs et des règles de comptage du système, pour calculer des distances entre les utilisateurs. Tout comme dans la vie réelle, selon l'invention, ces distances vont permettre suivant certains seuils de déclencher les appels spontanés entre les utilisateurs.

Ce sous-système de calcul est implémenté sous la forme d'un processus qui s'exécute en permanence et qui actualise ces distances tenant compte des modifications des modèles utilisateurs ou des évolutions

Dès lors qu'une distance prédéterminée entre deux utilisateurs atteint une valeur (définie par le système ou par les utilisateurs), un appel est initié automatiquement entre ces deux utilisateurs. Comme nous le verrons par la suite, cet appel peut prendre plusieurs formes (appel vocal, SMS, messagerie instantanée).

Comme cela a déjà été présenté en relation avec la figure 1, le sous-système de calcul comprend lui-même trois sous-systèmes : un sous-système d'apprentissage des règles, un sous-système de concaténation des présences thématiques et une interface.

Le sous-système d'apprentissage des règles comprend un ensemble de règles de comptage. Il permet, au fur et à mesure des utilisations par les utilisateurs, de modifier automatiquement les règles (et les modèles des utilisateurs) compte tenu de l'efficacité des appels provoqués antérieurement. Cette efficacité pourra être mesurée sur des critères donnés par les utilisateurs mais aussi obtenus automatiquement (par exemple sur la durée des appels ou encore l'absence de réponse) en fonction des éléments notés par le système de gestion et de présentation des appels.

Le sous-système d'apprentissage permet donc d'adapter en permanence les calculs de distances entre les utilisateurs en tenant compte des résultats des précédents calculs de distances et des échecs de mise en communication.

Le sous-système de concaténation des présences thématiques assure la cohérence des données permettant de consolider les modèles utilisateurs sur la base des informations de présence thématiques. Ces données son ensuite stockées afin d'être analysées par le système de calcul des distances. Ce système s'appuie notamment sur un moteur d'analyse sémantique permettant notamment l'analyse des informations de "analyse sémantique" définie par les utilisateurs.

L'interface permet de réaliser un échange de données entre le sous-système de collecte et le sous-système de calcul.

Il est possible de proposer une représentation de l'univers des utilisateurs sous forme de graphe. Une première implémentation matricielle est mise en oeuvre dans ce mode de réalisation.

Dans ce mode de réalisation, les distances entre des utilisateurs peuvent être représentées dans une matrice triangulaire M[n*n] (la matrice triangulaire est une matrice carrée symétrique). Chaque terme M(a,b) de cette matrice étant la distante entre a et b. L'utilisation de matrice est intéressante car elle permet de réaliser des opérations de calcul de manière simple, éprouvée et rapide, compte tenu des nombreuses applications qui se basent sur du calcul matriciel. Ainsi, dans ce mode de réalisation particulier, l'invention met en oeuvre des espaces matriciels dans lesquels chaque matrice contient un ensemble de distances entre utilisateurs (par exemple entre utilisateurs d'un même groupe, si les utilisateurs sont classés par groupe susceptible d'être mis en communication spontanée comme cela sera explicité par la suite).

Les matrices de ce mode de réalisation de l'invention sont des matrices carrées. Par exemple pour un ensemble de trois utilisateurs A, B et C, la matrice permettant de calculer une distance entre chacun de ces trois utilisateurs est une matrice [3x3] dans laquelle chaque utilisateur est représenté en ligne et en colonne.

Dans un mode de réalisation particulier de l'invention, ces matrices carrées sont également symétriques. Cela signifie que, pour un paramètre donné, la distance entre l'utilisateur A et l'utilisateur B est égale à la distance entre l'utilisateur B et l'utilisateur A. Il s'agit bien entendu d'un mode de réalisation particulier puisqu'il existe des cas où cette propriété n'est pas respectée et ou la distance qui sépare A de B n'est pas la même que celle qui sépare B de A. Par exemple, si un utilisateur A vend un voiture d'une certaine marque et d'un certain modèle et qu'un utilisateur B recherche une voiture de cette marque, sans qu'il en ait précisé le modèle, la distance qui va séparer A de B sera inférieure à celle qui va séparer B de A, car il y a une imprécision sur ce que B recherche.

Dans un cas basique axé simplement sur la géolocalisation, une règle consiste à calculer la distance géographique entre les utilisateurs et modifier ainsi la valeur de M(a,b) selon des pas prédéterminé (0, 1,...). Cette valeur est également pondérée par une règle par les informations de présence thématique (par exemple : si l'utilisateur A n'est pas disponible alors la distance qui le sépare des autres utilisateurs prend la valeur ∞).

Dans un cas complexe axé sur le souhait d'un utilisateur de faire une partie de tennis ce soir entre 18h30 et 20h00, le calcul de distance entre les utilisateurs est réalisé, dans ce mode de réalisation de l'invention, selon le principe suivant :
- chaque ensemble lexical de l'assertion « tennis ce soir entre 18h30 et 20h00 » fait l'objet d'un calcul de distance :
   - « tennis » qui est une valeur d'un paramètre « sport » et permet de calculer une distance D1 dans une matrice M1 ;
   - « ce soir » qui est une valeur d'un premier paramètre « temporel » et permet de calculer une distance D2 dans une matrice M2 ;
   - « entre 18h30 et 20h00 » qui est une valeur d'un deuxième paramètre « temporel » et permet de calculer une distance D3 dans une matrice M3 ;
- une distance supplémentaire, également calculée en permanence, est relative à la distance géographique qui sépare les utilisateurs, basée sur des techniques de géolocalisation, comme cela a déjà été explicité plus haut. Elle est également calculée et stockée dans une matrice M4.

Lorsque toues ces distances ont fait l'objet d'un calcul, il convient d calculer le résultat final, c'est-à-dire la distance finale, qui sépare les utilisateurs. Pour ce faire, l'utilisation, dans ce mode de réalisation de l'invention, des matrices carrées permet de simplifier les calculs en fonction des règles de calcul de distance qui sont mise en oeuvre.

Par exemple, dans le cas le plus simple, le calcul de la distance finale consiste à additionner, dans une matrice résultante MR, les différentes distances préalablement calculées pour obtenir une distance finale et sélectionner par exemple la distance la plus faible pour identifier les deux utilisateurs qui seront mis en relation. Cette opération d'addition dans une matrice est simple et rapide à réaliser.

Dans un cas qui mérite plus d'attention, les différentes matrices M1, M2, M3 et M4 sont respectivement pondérées par un facteur de pondération Pₓ lié au paramètre (« sport », « temporel » et « géographique ») puis ces matrices pondérées font l'objet d'une multiplication pour obtenir une distance plus représentative. Or cette multiplication est également simple à réaliser dans le cas de matrices carrées et encore plus simple dans le cas de matrices symétriques, de sorte que les calculs de distance sont effectués rapidement.

Ainsi, l'invention permet de résoudre un problème complémentaire qui est lié à l'instabilité des comportements des utilisateurs. En effet, les utilisateurs changent rapidement d'activité et l'invention permet, par l'utilisation de structures de données adaptées au calcul rapide (telles que les matrices) de ne pas perdre l'opportunité d'un appel par la faute d'un calcul de distance trop lent. En effet, lorsque le système objet de l'invention est mis en oeuvre pour des milliers d'utilisateurs, il est crucial de réaliser les calculs rapidement car les distances entre utilisateurs sont mises à jour en permanence.

Or un temps de calcul trop long peut avoir pour conséquence de laisser passer des opportunités d'appel, ce qui peut avoir un effet déceptif pour des utilisateurs, lorsqu'ils ont souscrit au service rendu par le système de l'invention et que cette souscription leur a été facturée. Ainsi, la mise ne oeuvre, selon l'invention, d'une structure de données qui permet des calculs rapides permet de minimiser de laisser passer des opportunités d'appel.

### 5.2.3 Sous-système de gestion et présentation des appels

Ce sous-système assure, sur commande du système de gestion des communications spontanées de l'invention, la mise en communication des utilisateurs et la présentation des "appels spontanés". Cette présentation doit permettre aux utilisateurs d'être informé sur le contexte et ou la motivation de l'appel afin de lui permettre d'accepter ou non la mise en communication.

Cette caractéristique elle conditionne fortement le taux d'acceptation des communications spontanées entre utilisateurs. En effet, si le système déclenche par exemple un appel téléphonique sur un terminal en se contentant de présenter un « appel masqué » et sans faire référence à un objet d'appel, il y a de plus grandes chances que l'utilisateur destinataire de l'appel refuse la communication, car ne sachant pas à quoi elle se rapporte. La présentation de l'appel spontané permet d'assurer que les utilisateurs soient informés de l'objet de l'appel.

Ainsi prenons par exemple le cas de deux utilisateurs, le premier recherchant une voiture rouge à acheter et le second possédant une voiture rouge à vendre. La présentation de l'appel spontané pourra consister, pour le premier utilisateur, à afficher un message du type « une voiture rouge est à vendre » et pour le deuxième utilisateur à afficher un message du type « un acheteur pour votre voiture rouge vendre ».

Les cas de présentation et le résultat obtenu (mise en relation ou non) sont notés par le système afin d'être réutilisés par le sous-système de calcul de distance entre les utilisateurs.

### 5.3 Autres caractéristiques optionnelles et avantages

Le système selon l'invention peut comprendre d'autres sous-systèmes, parmi lesquels un sous système de gestion de la présence et de l'état communautaire qui permet au système de s'alimenter en données issues des différents outils utilisés par les utilisateurs (IM, FaceBook-marque déposée-, Blog, etc.) afin de compléter les modèles et les instances de modèle. Ce sous-système peut permettre le déclenchement de mise en relation spontanées autrement que par une communication téléphonique, en privilégiant des modes de communication moins intrusifs. Cette première mise en relation peut être suivie d'une mise en relation par communication téléphonique le cas échéant, par exemple si les deux utilisateurs mis en relation par le biais de la messagerie instantanée ont accepté une mise en relation téléphonique.

## Revendications

1. Système d'établissement d'une communication entre au moins deux terminaux détenus respectivement par au moins un premier et un deuxième utilisateur, ledit système comprenant :
- des moyens de collecte (101) d'au moins un paramètre représentatif d'une caractéristique propre à au moins un utilisateur ;
- des moyens de calcul (103) d'au moins une distance entre un premier ensemble d'au moins un des paramètres dudit premier utilisateur et un second ensemble d'au moins un paramètre correspondant dudit deuxième utilisateur ;
- des moyens d'établissement (104) d'une communication entre lesdits au moins deux terminaux, lorsque ladite distance atteint un seuil prédéterminé,
ledit système étant **caractérisé en ce que** lesdits moyens de calcul (103) de ladite distance comprennent des moyens d'apprentissage (1033) de règles de mise en relation d'utilisateurs en fonction de mises en relation précédemment réalisées.

2. Système d'établissement d'une communication selon la revendication 1, **caractérisé en ce que** lesdits moyens de calcul (103) de ladite distance comprennent en outre des moyens de concaténation (1032) de données de présences thématiques d'utilisateurs audit au moins un paramètre propre desdits utilisateurs.

3. Système d'établissement d'une communication selon la revendication 2, **caractérisé en ce que** lesdits moyens de calcul (103) de ladite distance comprennent :
- des moyens d'enregistrement desdites règles (10331) de mise en relation d'utilisateurs en fonction de règles préalablement apprises ;
- des moyens d'enregistrement desdites données de présences thématiques d'utilisateurs préalablement concaténées ;
- des moyens d'enregistrement desdites distances (10341) entre lesdits utilisateurs.

4. Système selon la revendication 3, **caractérisé en ce que** lesdits moyens d'enregistrement desdites distances entre lesdits utilisateurs comprennent au moins une matrice de calcul de distance permettant l'affectation d'au moins une distance entre au moins deux utilisateurs pour an moins un paramètre donné.

5. Système d'établissement d'une communication selon l'une quelconque des revendications 1 à 4, **caractérisé en ce que** lesdits moyens de collecte desdits paramètres représentatifs desdites caractéristiques propres desdits utilisateurs comprennent en outre des moyens d'obtention d'au moins une information de présence desdits utilisateurs.

6. Système d'établissement d'une communication selon l'une quelconque des revendications 1 à 5, **caractérisé en ce que** lesdits moyens de collecte desdits paramètres représentatifs desdites caractéristiques propres desdits utilisateurs comprennent en outre des moyens d'obtention d'une information de désignation d'un terminal permettant la mise en relation desdits utilisateurs.

7. Système d'établissement d'une communication selon l'une quelconque des revendications 1 à 6, **caractérisé en ce que** lesdits moyens de collecte desdits paramètres représentatifs desdites caractéristiques propres desdits utilisateurs comprennent en outre des moyens de gestion de la présence et/ou de l'état communautaire desdits utilisateurs.

8. Procédé d'établissement d'une communication entre au moins deux terminaux détenus respectivement par au moins un premier et un second utilisateur, ledit procédé comprenant :
- une étape de collecte (101) d'au moins un paramètre représentatif d'une caractéristique propre à au moins un utilisateur ;
- une étape de calcul (103) d'au moins une distance entre un premier ensemble d'au moins un des paramètres dudit premier utilisateur et un second ensemble d'au moins un paramètre correspondant dudit deuxième utilisateur ;
- une étape d'établissement (104) d'une communication entre lesdits au moins deux terminaux, lorsque ladite distance atteint un seuil prédéterminé,
ledit procédé étant **caractérisé en ce que** ladite étape de calcul (103) comprend au moins une étape d'apprentissage (1033) de règles de mise en relation d'utilisateurs en fonction de mises en relation précédemment réalisées.

9. Procédé selon la revendication 8, **caractérisé en ce qu'**au moins certains desdits paramètres sont définis par rapport à un contexte virtuel fréquenté par au moins un desdits utilisateurs.

10. Procédé selon la revendication 9 **caractérisé en ce que** lesdits paramètres appartiennent au groupe comprenant au moins :
- un paramètre de géolocalisation réelle ;
- un contexte virtuel fréquenté ;
- une présence thématique ;
- un paramètre d'utilisateur pris en charge dans un contexte virtuel.

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de communication selon l'une au moins des revendications 8 à 10, lorsqu'il est exécuté sur un ordinateur.

## Claims

1. System for establishing a communication between at least two terminals respectively held by at least a first and a second user, the said system comprising:
- means (101) of collecting at least one parameter representative of a characteristic specific to at least one user;
- means (103) of calculating at least a distance between a first set of at least one of the parameters of the said first user and a second set of at least one corresponding parameter of the said second user;
- means (104) of establishing a communication between the said at least two terminals, when the said distance reaches a predetermined threshold,
the said system being **characterized in that** the said means (103) of calculating the said distance comprise means (1033) of learning rules for connecting users according to previously produced connections.

2. System for establishing a communication according to Claim 1, **characterized in that** the said means (103) of calculating the said distance furthermore comprise means (1032) of concatenation of 'thematic presence of users' data with the said at least one parameter specific to the said users.

3. System for establishing a communication according to Claim 2, **characterized in that** the said means (103) of calculating the said distance comprise:
- means (10331) of recording the said rules for connecting users according to previously learnt rules;
- means of recording the said previously concatenated 'thematic presence of users' data;
- means (10341) of recording the said distances between the said users.

4. System according to Claim 3, **characterized in that** the said means of recording the said distances between the said users comprise at least one distance-calculating matrix allowing the allocation of at least one distance between at least two users for at least a given parameter.

5. System for establishing a communication according to any one of Claims 1 to 4, **characterized in that** the said means of collecting the said parameters representative of the said characteristics specific to the said users furthermore comprise means of obtaining at least one item of information of presence of the said users.

6. System for establishing a communication according to any one of Claims 1 to 5, **characterized in that** the said means of collecting the said parameters representative of the said characteristics specific to the said users furthermore comprise means of obtaining an item of information of designation of a terminal allowing the connection between the said users.

7. System of establishing a communication according to any one of Claims 1 to 6, **characterized in that** the said means of collecting the said parameters representative of the said characteristics specific to the said users furthermore comprise means of management of the presence and/or community status of the said users.

8. Method of establishing a communication between at least two terminals respectively held by at least a first and a second user, the said method comprising:
- a step (101) for collecting at least one parameter representative of a characteristic specific to at least one user;
- a step (103) of calculating at least a distance between a first set of at least one of the parameters of the said first user and a second set of at least one corresponding parameter of the said second user;
- a step (104) of establishing a communication between the said at least two terminals, when the said distance reaches a predetermined threshold,
the said method being **characterized in that** the said calculating step (103) comprises at least one step (1033) of learning rules for connecting users according to previously produced connections

9. Method according to Claim 8, **characterized in that** at least some of the said parameters are defined with respect to a virtual context frequented by at least one of the said users.

10. Method according to Claim 9, **characterized in that** the said parameters belong to a group comprising at least:
- a real geographic location parameter;
- a frequented virtual context;
- a thematic presence;
- a user parameter supported in a virtual context.

11. Computer program product downloadable from a communications network and/or stored on a computer-readable medium and/or executable by a microprocessor, **characterized in that** it comprises program code instructions for the execution of the communication method according to at least one of Claims 8 to 10, when it is executed in a computer.

## Patentansprüche

1. System zum Aufbau einer Verbindung zwischen mindestens zwei Endgeräten, die im Besitz mindestens eines ersten bzw. eines zweiten Benutzers sind, wobei das System enthält:
- Einrichtungen (101) zum Sammeln mindestens eines für ein Eigenmerkmal mindestens eines Benutzers repräsentativen Parameters;
- Einrichtungen (103) zum Berechnen mindestens einer Entfernung zwischen einer ersten Einheit mindestens eines der Parameter des ersten Benutzers und einer zweiten Einheit mindestens eines entsprechenden Parameters des zweiten Benutzers;
- Einrichtungen (104) zum Aufbau einer Verbindung zwischen den mindestens zwei Endgeräten, wenn die Entfernung einen vorbestimmten Schwellwert erreicht,
wobei das System **dadurch gekennzeichnet ist, dass** die Einrichtungen (103) zum Berechnen der Entfernung Einrichtungen (1033) zum Lernen von Regeln zum Verknüpfen von Benutzern abhängig von vorher durchgeführten Verknüpfungen enthalten.

2. System zum Aufbau einer Verbindung nach Anspruch 1, **dadurch gekennzeichnet, dass** die Einrichtungen (103) zum Berechnen der Entfernung außerdem Einrichtungen (1032) zum Verketten von Daten thematischer Präsenzen von Benutzern mit dem mindestens einen Eigenparameter der Benutzer enthalten.

3. System zum Aufbau einer Verbindung nach Anspruch 2, **dadurch gekennzeichnet, dass** die Einrichtungen (103) zum Berechnen der Entfernung enthalten:
- Einrichtungen (10331) zum Aufzeichnen der Regeln zur Verknüpfung von Benutzern abhängig von vorher gelernten Regeln;
- Einrichtungen zum Aufzeichnen der vorher verketteten Daten thematischer Präsenzen von Benutzern;
- Einrichtungen (10341) zum Aufzeichnen der Entfernungen zwischen den Benutzern.

4. System nach Anspruch 3, **dadurch gekennzeichnet, dass** die Einrichtungen zum Aufzeichnen der Entfernungen zwischen den Benutzern mindestens eine Entfernungsberechnungsmatrix enthalten, die die Zuordnung mindestens einer Entfernung zwischen mindestens zwei Benutzern für mindestens einen gegebenen Parameter erlaubt.

5. System zum Aufbau einer Verbindung nach einem der Ansprüche 1 bis 4, **dadurch gekennzeichnet, dass** die Sammeleinrichtungen der für die Eigenmerkmale der Benutzer repräsentativen Parameter außerdem Einrichtungen zum Erhalt mindestens einer Präsenzinformation der Benutzer enthalten.

6. System zum Aufbau einer Verbindung nach einem der Ansprüche 1 bis 5, **dadurch gekennzeichnet, dass** die Sammeleinrichtungen der für die Eigenmerkmale der Benutzer repräsentativen Parameter außerdem Einrichtungen zum Erhalt einer Benennungsinformation eines Endgeräts enthalten, die die Verknüpfung der Benutzer erlaubt.

7. System zum Aufbau einer Verbindung nach einem der Ansprüche 1 bis 6, **dadurch gekennzeichnet, dass** die Sammeleinrichtungen der für die Eigenmerkmale der Benutzer repräsentativen Parameter außerdem Einrichtungen zur Verwaltung der Präsenz und/oder des Gemeinschaftszustands der Benutzer enthalten.

8. Verfahren zum Aufbau einer Verbindung zwischen mindestens zwei Endgeräten, die im Besitz mindestens eines ersten bzw. eines zweiten Benutzers sind, wobei das Verfahren enthält:
- einen Schritt (101) des Sammelns mindestens eines für ein Eigenmerkmal mindestens eines Benutzers repräsentativen Parameters;
- einen Schritt (103) des Berechnens mindestens einer Entfernung zwischen einer ersten Einheit mindestens eines der Parameter des ersten Benutzers und einer zweiten Einheit mindestens eines entsprechenden Parameters des zweiten Benutzers;
- einen Schritt (104) des Aufbaus einer Verbindung zwischen den mindestens zwei Endgeräten, wenn die Entfernung einen vorbestimmten Schwellwert erreicht,
wobei das Verfahren **dadurch gekennzeichnet ist, dass** der Schritt (103) des Berechnens mindestens einen Schritt (1033) des Lernens von Regeln zur Verknüpfung von Benutzern abhängig von vorher durchgeführten Verknüpfungen enthält.

9. Verfahren nach Anspruch 8, **dadurch gekennzeichnet, dass** mindestens bestimmte der Parameter bezüglich eines virtuellen Kontexts definiert werden, der von mindestens einem der Benutzer häufig besucht wird.

10. Verfahren nach Anspruch 9, **dadurch gekennzeichnet, dass** die Parameter zu der Gruppe gehören, die mindestens enthält:
- einen Parameter realer Geolokalisation;
- einen häufig besuchten virtuellen Kontext;
- eine thematische Präsenz;
- einen Benutzerparameter, der in einen virtuellen Kontext übernommen wird.

11. Computerprogrammprodukt, das von einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Programmcodeanweisungen für die Ausführung des Verbindungsverfahrens nach mindestens einem der Ansprüche 8 bis 10 enthält, wenn es in einem Computer ausgeführt wird.
